(19)

**Europäisches Patentamt**
**European Patent Office**
**Office européen des brevets**

(11) **EP 3 222 340 A1**

(12) **EUROPEAN PATENT APPLICATION**

(43) Date of publication:
**27.09.2017 Bulletin 2017/39**

(21) Application number: **17162417.4**

(22) Date of filing: **22.03.2017**

(51) Int Cl.:
**B01D 61/14** (2006.01)　　　**B01D 63/02** (2006.01)
**B01D 69/08** (2006.01)　　　**B01D 71/68** (2006.01)
**C02F 1/00** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.03.2016 EP 16161812**

(71) Applicants:
• **Holzer, André**
　**Saint Petersburg 195027 (RU)**
• **Kohleick, Reinhard**
　**42109 Wuppertal (DE)**

• **Millett, Thomas**
　**1469 Luxembourg (LU)**

(72) Inventors:
• **HOLZER, André**
　**195027 Saint Petersburg (RU)**
• **KOHLEICK, Reinhard**
　**42109 Wuppertal (DE)**
• **MILLETT, Thomas**
　**1469 Luxembourg (LU)**

(74) Representative: **Mellet, Valérie Martine**
　**Patent42**
　**34 rue Dicks**
　**4081 Esch sur Alzette (LU)**

(54) **USE OF HOLLOW-FIBRE MEMBRANES FOR THE TREATMENT OF WASTEWATER BY FILTRATION**

(57)　The invention relates to the use of hollow-fibre membrane having hollow-fibres of an inner diameter D ranging from 0.5 to 2.5 mm and a length L in m in a filtration module for the treatment of wastewater wherein said use involve adjusting the velocity of the wastewater within the fibres and the pressure difference as measured at the entry and the exit of the membrane in order to achieve a transport regime of the wastewater within the fibres monitored by the decrease of the apparent viscosity of the wastewater within the membrane and resulting and a reduction of clogging and/or fouling of the membrane.

**EP 3 222 340 A1**

**Description**

**Field of the invention**

The invention relates to the treatment of wastewater by filtration. The invention is particularly suitable, but not only, to the treatment of wastewater such as the digestate exiting a biogas reactor.

**Background of the invention**

Biomethanation is an effective and ecological method for the treatment of organic wastes. The waste is introduced to larges tanks where anaerobic digesters (i.e., bacteria) consume the organics, releasing methane and carbon dioxide gas. The gas is collected and burned to produce energy. Once the organics in the waste are broken down, what remains is a wastewater solution of nutrients and salts that must be disposed of.

The wastewater is saturated with ultra-fine materials that will clog most known filtration equipment. Therefore, it is common to land-apply the solution. However, this may cause pollution problems into groundwater and rivers if too much of such solution is used as irrigation water. Thus there is still a need to find processes and installations that allow to filtrate such wastewater in a satisfactory way. In particular, there is a need for processes and installations that avoid clogging and/or fouling of the filtration membranes during treatment of such wastewater.

Clogging relates to the obstruction of the pores of the filtration membranes by spontaneous sticking together of materials (such as fibres or bacteria) on the surface of the filtration membrane. Fouling relates to the gradual buildup of bacteria films over time on the surface of the membrane. In both cases, the membrane filtration resistance is increased and the filtration efficiency is lowered. Thus, there is a need for installations and processes allowing to keep satisfying filtration efficiency over the time.

Solutions have already been proposed to overcome the fouling of filtration membranes and especially of ultrafiltration membranes. Prior art teaches to form first a membrane of hydrophobic polymer and then to subject said membrane to various surface treatments to cover its surface with hydrophilic polymer so as to enhance the anti-fouling properties. Mechanical processes have also been proposed. For example WO2015/069190 discloses an ultrafiltration module comprising a vibration stirring membrane module system that submerged hollow-fibre membrane filtration to lower the fouling phenomenon of the membranes. Another example is found in US2011/0017660 which discloses a hollow-fibre ultrafiltration membrane with excellent fouling resistance, wherein the specific membrane surface (to which raw water is supplied) falls within the range from not less than 1.10 to not greater than 1.55. The idea is to decrease the contact area with the membrane surface and the fouling substance and to lower the adhesion of the fouling substance, thereby enabling the fouling substance adhering to the membrane surface to be easily peeled off.

However, these solutions do not address the clogging problem of the ultrafiltration membranes. To avoid clogging, it is common to regularly backflush the permeate during filtration and/or to wash the membrane by chemical agents having a pH of over 7 such as NaOH for example, as disclosed in US2005/0150831.

Regular cleaning of the ultrafiltration membranes is efficient but renders the membrane unusable during the cleaning process. Thus, there is still a need to find processes and installations for treatment of wastewater including ultrafiltration of said wastewater that avoid or at least reduce the clogging of the filtration membranes in a way that they reduce the time spent in cleaning the membranes.

Similar problems of clogging and/or fouling of the membranes are encountered regarding microfiltration membranes. Thus, it is an object of the invention to propose new solutions for treatment of wastewater that reduce or avoid fouling and/or clogging of the filtration membranes such as microfiltration membranes or ultrafiltration membranes. In particular, the invention proposes solutions for the treatment of wastewater originating from anaerobic digestion.

**Summary of the invention**

The invention provides the use of an hollow-fibre membrane having a number of hollow-fibres each of an inner diameter D ranging from 0.5 to 2.5 mm and a length L in m in a filtration module for the treatment of wastewater having an initial viscosity $\mu_i$ in mPa s before filtration; wherein said use includes passing the wastewater through the hollow-fibres of the membrane:

- at a velocity V in m/s complying with the relationship $L \geq V \times 0.3$ sec, and
- with a pressure difference $\Delta P$ in Pa selected to have an apparent viscosity $\mu$ in mPa s of the wastewater within the hollow-fibres being lower than the initial viscosity $\mu_i$ of the wastewater as measured before entering the filtration module, the apparent viscosity $\mu$ within the hollow-fibres being calculated according to formula (1)

$$\mu = \frac{1}{8} \times \frac{R^2}{L} \times \frac{\Delta P}{V} \quad (1)$$

wherein

- R is the inner radius in m of the hollow fibres and corresponds to D/2,
- passing a wastewater stream through the hollow-fibres of the membrane results in a permeate stream and a retentate stream and the pressure difference $\Delta P$ is the difference between the pressure as measured on the wastewater stream at the entrance of the hollow-fibre membrane and on the retentate stream at the exit of the membrane; and
- V is the calculated velocity of the wastewater within the hollow-fibres calculated from the flux per fibre in $m^3/s$ and the cross section of said fibres in $m^2$, wherein the flux per fibre is determined from the total flux divided by the number of fibres in the membrane, and further wherein the total flux of the wastewater is the flux of the wastewater stream as measured at the entrance of the hollow-fibre membrane.

In a preferred embodiment, the filtration module is operated in a recirculating mode.

It has been found by the inventors that the combination of specific filtration membranes with specific operating conditions allows the treatment of wastewater containing suspended solid materials by filtration, such as by microfiltration or ultrafiltration, without resulting in the filtration membrane being clogged and/or fouled.

Without being bound by a theory, it is believed that under these conditions, a laminar wastewater stream is formed within the hollow fibres and separated into a suspension enriched in solids flowing in the center of the fibres and an enveloping film - largely devoid of solids and bacteria - covering the inner perimeter of the fibre membrane wall, which prevents said filtration membrane of being fouled and/or clogged.

It has also been found that, surprisingly, in order to have this laminar wastewater stream to be formed within the hollow-fibres, the hollow-fibres should be selected to have a minimal length (at a given diameter and at a given velocity of the wastewater within the fibres).

Preferred embodiments of the use according to the invention are set herein below. Each embodiment of the invention so defined may be combined with any other embodiment, unless clearly indicated to the contrary.

- The pressure difference is the difference between the pressure as measured at the entrance of the membrane on a clarified wastewater stream and at the exit of the membrane on the retentate stream.
- The filtration module is operated in a recirculating mode wherein at least 80 vol% of the retentate stream exiting the membrane is recirculated back to the entry of the membrane, preferably at least 90 vol% of the retentate stream exiting the membrane is recirculated, more preferably at least 95 vol% of retentate stream exiting the membrane is recirculated back to the entry of the membrane, even more preferably at least 98 vol%, and most preferably at least 99 vol%.
- The filtration module is a microfiltration module or an ultrafiltration module.
- The wastewater has an initial viscosity $\mu i$ of at most 20 mPa s, preferably ranging from 5 to 20 mPa s, more preferably ranging from 6 to 15 mPa s, and even more preferably ranging from 7 to 12 mPa s, wherein the initial viscosity $\mu i$ being measured by a rotational viscometer at 20°C at a shear rate of 1000 $s^{-1}$.
- The use includes passing the wastewater through the hollow-fibres of the membrane at a velocity V in m/s complying with the relationship $L \geq V \times 0.4$ sec, preferably complying with the relationship $L \geq V \times 0.5$ sec.
- The hollow-fibres have an inner diameter ranging from 0.6 to 2.0 mm, preferably ranging from 0.7 to 1.8, more preferably ranging from 0.8 to 1.5 mm.
- The velocity V of the wastewater within the hollow-fibres is at least 1 m/s, preferably at least 1.2 m/s.
- The hollow fibres have a length L of at least 0.75 m, preferably of at least 0.80 m, more preferably of at least 0.90 m.
- The velocity V of the wastewater within the hollow fibres is at most 5 m/s, preferably at most 3 m/s and more preferably at most 2 m/s.
- The pressure difference $\Delta P$ is ranging from 20,000 Pa to 150,000 Pa, preferably ranging from 50,000 to 120,000 Pa.
- The hollow-fibre membrane is an organic hollow-fibre membrane, preferably said hollow-fibre membrane is made of one selected from polyethylene, polypropylene, polyvinylidene fluoride, polysulfone, polyether sulfone, polyacrylonitrile, polyamide, cellulose, cellulose acetate or any combination thereof, more preferably said hollow-fibre membrane is made of polysulfone.
- The use includes adjusting the pressure difference and/or the velocity of the wastewater to have an apparent viscosity $\mu$ of the wastewater within the fibres being at most 0.6 $\mu i$, preferably at most 0.5 $\mu i$, more preferably at most 0.4 $\mu i$, and even more preferably at most 0.35 $\mu i$, wherein the initial viscosity being measured by a rotational viscometer at 20°C at a shear rate of 1000 s$^{-1}$.

- The use includes adjusting the pressure difference $\Delta P$ and/or the velocity V of the wastewater to have an apparent viscosity $\mu$ of the wastewater within the fibres being at least 0.05 $\mu i$, preferably at least 0.1 $\mu i$, and more preferably at least 0.12 $\mu i$, wherein the initial viscosity $\mu i$ being measured by a rotational viscometer at 20°C at a shear rate of 1000 s$^{-1}$.
- The hollow-fibre membrane is an ultrafiltration membrane.
- The hollow-fibre membrane is an ultrafiltration membrane and has a cut-off of less than 150 KD, preferably less than 50 KD, more preferably less than 20 KD.
- The hollow-fibre membrane is a microfiltration membrane.
- The hollow-fibre membrane has a double skin.
- The hollow-fibre membrane has pure water flux at 20°C of at least 50 l/h.bar, preferably of at least 150l/h.bar.
- The wastewater is passed through said hollow-fibre membrane in a tangential mode.
- The wastewater is a disgestate exiting a biogas reactor, with preference said digestate is produced by an anaerobic digestion in a biogas reactor of a feedstock slurry comprising a feedstock selected from animal tissues, biomass, fish tissues or parts, plant parts, fruits, vegetables, plant processing wastes, animal processing wastes, animal manure or urine, mammalian manure or urine, solids isolated from fermentations cultures and combination thereof, diluted in an aqueous solution.
- The use further includes pretreating the wastewater by centrifugation in order to obtain a clarified wastewater having a dry mater content of at most 5 wt% based on the total weight of the clarified wastewater, wherein said step of centrifugation is conducted prior to the filtration of the wastewater by the hollow-fibre membrane and further wherein the dry matter content is the weight content of both soluble and insoluble solids left after a sample of the wastewater is subjected to an evaporation process to eliminate water and other volatile components.
- The use further includes pretreating the wastewater by both prefiltration and centrifugation, wherein the step of prefiltration is conducted prior to the step of centrifugation.
- The use further includes pretreating the wastewater by prefiltration, preferably with a filter having a pore size of at most 100 $\mu m$, more preferably with a filter having a pore size ranging from 30 to 100 $\mu m$; wherein said step of prefiltration is conducted prior to the filtration of the wastewater by the hollow-fibre membrane, and preferably prior to a centrifugation step.
- The use is devoid of any heat treatment step of the wastewater before entering the filtration module.
- The use is devoid of any flocculation step and/or coagulation step to be performed on the wastewater before entering the filtration module.
- The filtration module, preferably the ultrafiltration module, comprises one or more hollow-fibre membrane modules and at least one hollow-fibre membrane module has a membrane area of more than 2 m$^2$.

US2014/0343178 discloses a method for manufacturing a porous hollow fiber membrane. This document discloses how to produce a membrane but not how to use it in order to avoid clogging and fouling when wastewater is filtered.

**Brief description of the drawings**

- Figure 1 represents an installation according to the invention
- Figure 2 represents a graph plotting the permeation flux as a function of time for example 1 (E1).
- Figure 3 is a graph plotting the permeation flux as a function of time for example 4 (E4).
- Figure 4 is a graphic plotting the pressure difference over the membrane fibres as a function of the flux per fibre for water in a membrane according to the invention.

**Detailed description of the invention**

The terms "comprising", "comprises" and "comprised of" as used herein are synonymous with "including", "includes", or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all numbers and fractions subsumed within the respective ranges, as well as the recited endpoints.

The invention defines ultrafiltration membranes as membranes having pore sizes ranging from 0.1 $\mu m$ to 0.01 $\mu m$ and microfiltration membranes as membranes having pore sizes ranging from 10 $\mu m$ to 0.1 $\mu m$. According to the invention a membrane having pore sizes of 0.1 $\mu m$ is considered to be an ultrafiltration membrane.

Velocity within the hollow-fibres is the calculated velocity of the wastewater (or digestate) calculated from the flux per fibre (in m$^3$/s) and the cross section of said fibres (in m$^2$). The flux per fibre is determined from the total flux divided by the number of fibres in the membrane, wherein the total flux of the wastewater is the flux of the wastewater as measured at the entry of the membrane.

The particulars features, structures, characteristics or embodiments may be combined in any suitable manner, as would be apparent to a person skilled in the art from this disclosure in one or more embodiments.

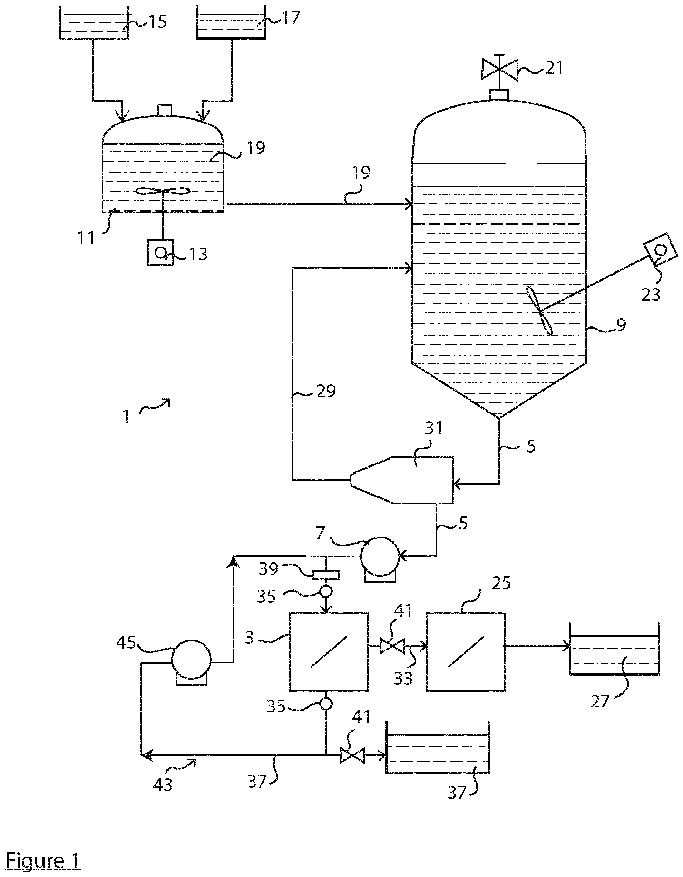

The installation 1 and the use according to the invention are described jointly in reference to figure 1.

The invention relates to the use of a hollow-fibre membrane having hollow-fibres of an inner diameter D ranging from 0.5 to 2.5 mm and a length L in m in a filtration module 3 for the treatment of wastewater 5 having an initial viscosity $\mu$i in mPa s before filtration; wherein said use includes passing the wastewater 5 through the hollow-fibres of the membrane:

- at a velocity V in m/s complying with the relationship L $\geq$ V x 0.3 sec, and
- with a pressure difference $\Delta$P in Pa selected to have an apparent viscosity $\mu$ in mPa s of the wastewater 5 within the fibres being lower than the initial viscosity $\mu$i of the wastewater 5 as measured before entering the filtration module 3, wherein the apparent viscosity $\mu$ within the fibres is calculated according to formula (1)

$$\mu = \frac{1}{8} \times \frac{R^2}{L} \times \frac{\Delta P}{V} \ (1)$$

wherein:

- R is the inner radius in m of the hollow fibres and corresponds to D/2;
- passing a wastewater stream through the hollow-fibres of the membrane results in a permeate stream and a retentate stream and the pressure difference $\Delta$P is the difference between the pressure as measured on the wastewater stream at the entrance of the hollow-fibre membrane and on the retentate stream at the exit of the membrane; and
- V is the calculated velocity of the wastewater within the fibres calculated from the flux per fibre in m$^3$/s and the cross section of said fibres in m$^2$, wherein the flux per fibre is determined from the total flux divided by the number of fibres in the membrane, and further wherein the total flux of the wastewater is the flux of the wastewater stream as measured at the entrance of the hollow-fibre membrane.

The installation and the use of the invention will be described in relation with a filtration module being an ultrafiltration module 3. It is however understood that the invention can also relate to the use of microfiltration modules.

It is understood that the pressure difference is the difference between the pressure as measured at the entrance of the hollow-fibre membrane on the wastewater stream (or on the clarified wastewater stream) and at the exit of the hollow-fibre membrane on the retentate stream.

The use can be conducted in an installation 1 comprising means 7 to provide a wastewater 5 to an ultrafiltration module 3. Said means 7 can comprise a pump 7, also called feed pump 7, allowing to inject the wastewater 5 to the ultrafiltration module 3 at a determined flux resulting in a determined velocity within the hollow-fibres.

In a preferred embodiment of the invention, the wastewater 5 is a digestate exiting a biogas reactor 9, so that the installation 1 may comprise at least one biogas reactor. However, it is understood that the use of the invention is not limited to the treatment of wastewater originating from anaerobic digestion.

Optionally, in such a case, the installation 1 comprises a collection tank 11 provided with agitation means 13 in which feedstock 15 is collected and diluted by addition of an aqueous solution 17 such as fresh or recycled water. As used herein the term "feedstock" is taken to mean any organic waste material such as animal or plant material or mixture of animal and/or plant material that contains one or more components that can be converted into biogas through an anaerobic fermentation process in a biogas reactor. The feedstock can comprise one or more organic waste material selected from animal tissue, biomass, fish tissue or part, plant parts, fruits, vegetables, plant processing wastes, animal processing wastes, animal manure or urine, mammalian manure or urine, solids isolated from fermentations cultures and combination thereof.

The diluted material 19 (or feedstock slurry) is pumped to be led to the biogas reactor 9 wherein the fermentation takes place. Biogas produced by the fermentation is removed from the reactor via an outlet 21 at the top of the reactor vessel. The collecting of the biogas is done according to conventional methods known to the person skilled in the art and therefore not described any further in the present application.

Anaerobic bacteria are bacteria capable of transforming a feedstock into biogas, such as for example methane, within an anaerobic biogas reactor. According to the invention the anaerobic bacteria can be either mesophile or thermophile.

Examples of anaerobic bacteria that can be used in a biogas reactor or anaerobic biogas reactor include yeast, methanogenic bacterium, methanobacterium acetobacterium, acetogenic bacterium, liquefaction bacterium, Clostridium spp. (methane), Bacillus spp., Escherichia spp., Staphylococcus spp., Methanobacter spp., Methanobacter (Mb.) omlianskii (methane), Mb. formicicum (methane), Mb. soehngenii (methane), Mb. thermoautrophicum (methane), Mb. ruminatium (methane), Mb. mobile (methane), Mb. methanica (methane), Methanococcus (Mc.) mazei (methane), Mc. vannielii (methane), Ms. mazei (methane), Mb. suboxydans (methane), Mb. propionicum (methane), Methanosarcina (Ms.) bovekeri (methane), Ms. methanica (methane), Ms. alcaliphilum (methane), Ms. acetivorans (methane), Ms. thermophilia (methane), Ms. barkeri (methane), Ms. vacuolata (methane), Propionibacterium acidi-propionici (methane), Saccharomyces cerevisae (ethanol), S. ellipsoideus (ethanol), Clostridium propionicum (propanol), Clostridium saccharoacetoper-butylicum (butanol), Clostridium butyricum (hydrogen), wherein the chemical in parentheses indicates an useful material which that bacteria produces.

A classic biogas reactor contains about 1,000 to 5,000 m$^3$. Fermentation is conducted under mesophilic or thermophilic conditions. Thus the process is conducted at temperatures ranging from ambient temperature (i.e. about 20°C) to 80°C.

The biogas reactor 9 is provided with agitating means 23 and recirculation pumps (not represented) in order to have the reaction solution constantly in movement. This is to avoid the sedimentation of the solids contained in the reaction solution and the genesis of a film or crust on the liquid surface that could disturb the collection of the produced biogas.

In accordance with the invention, the amount of solids in the biogas reactor 9 is ranging from 1 to 70 wt%, preferably from 10 to 60 wt% based upon the total weight of the solution inside the reactor.

The residence time in the biogas reactor 9 will vary depending on several factors, such as the nature of the feedstock 15. For example the average residence time is about 10 to 40 days.

In accordance with the invention the biogas reactor 9 is provided with a steady flow of feedstock or feedstock slurry. In order to have a continuous process, the biogas reactor is supplied with a continuous flow of feedstock slurry 19, and the same volume of liquid is removed continuously as digestate 5. The volume of the biogas reactor 9 and the rate flow entering (feed rate) or exiting (effluent rate) the biogas reactor are calculated to have the average desired residence time in the biogas reactor 9 for proceeding with the fermentation.

Once the anaerobic fermentation is done, the digestate 5 contained in the biogas reactor 9 is pumped, optionally filtered by filtration means or clarified by centrifugation, before being submitted to an ultrafiltration step and followed optionally by a reverse osmosis step in a reverse osmosis unit 25 in order to recover water 27.

When the wastewater is a digestate exiting from a biogas reactor, it may contain particles of a certain size. Thus with preference, the use further includes pretreating the digestate 5 (herein also called the wastewater 5) by filtration, preferably with a filter having a pore size of at most 100 $\mu$m, more preferably with a filter having a pore size ranging from 30 to 100 $\mu$m; wherein said step of prefiltration is conducted prior the filtration of the wastewater 5 by the hollow-fibre membrane, and preferably prior any centrifugation step. When a prefiltration step is conducted the initial viscosity $\mu_i$ of the wastewater 5 is the viscosity of the wastewater as measured after said prefiltration step before the wastewater is submitted to ultrafiltration.

Without being bound by theory, it is believed that in order to have the suitable transport regime to be achieved within the fibres, the wastewater should not contain too large suspended particles that may disturb the enveloping film and maybe lead to the apparition of a turbulent regime.

Thus, the man skilled in the art may have advantage, to limit the size of the suspended particles by means of one or more pretreatment step of centrifugation and/or filtration if from the nature of the wastewater it is expected that it contains suspended particles of a size larger than 100 $\mu$m. However, according to the invention no chemical treatment such as flocculation treatment or coagulation treatment is required.

In a preferred embodiment, the dry matter content of the wastewater 5 before ultrafiltration is at most 5 wt%, preferably at most 4 wt%, more preferably at most 3 wt% based on the total weight of the wastewater. The term "dry matter content" is to the amount of both soluble and insoluble solids left after a sample of the wastewater is subjected to an evaporation process to eliminate water and other volatile components.

With preference, the digestate 5 is submitted to a step of centrifugation resulting in a clarified digestate 5 having a dry mater content of at most 5 wt% based on the total weight of the digestate. The centrifugate concentrate 29 can be recycled to the biogas reactor 9. Thus the installation 1 preferably further comprises a centrifuge 31 to treat the wastewater 5 before the ultrafiltration module 3. When both a prefiltration step and a centrifugation step are conducted before ultrafiltration, the centrifugation step is preferably conducted after the prefiltration step. It is understood that the initial viscosity of the wastewater is the viscosity measured before the ultrafiltration module thus on the clarified wastewater when a centrifugation step is performed.

The function of the ultrafiltration step is to obtain from the digestate 5, a particle-free permeate 33 and a retentate 37. Ultrafiltration is performed in an ultrafiltration module 3 comprising at least one hollow-fibre membrane. The ultrafiltration module 3 can be part of an ultrafiltration unit equipped with several modules which number depends on the size of the treatment plant. Thus, the use of an hollow-fibre membrane in accordance to the invention, encompasses the use of more than one hollow-fibre membrane in a filtration module 3.

The installation 1 further comprises means configured to pass the wastewater (or digestate) through said at least one hollow-fibre membrane at a flux of at least 3,000 l/h, preferably at a flux ranging from 3,000 l/h to 7,000 l/h and more preferably ranging from 4,000 l/h to 6,000 l/h. The flux may be controlled by a flowmeter 39. The pressure may be controlled by means of the pump 7 upstream the ultrafiltration module 3 and/or the pressure valves 41 downstream the ultrafiltration module 3 on both the permeate 33 and retentate 37.

The installation 1 can further comprise means 35 to measure the pressure at the entrance and at the exit of the ultrafiltration module 3 in order to calculate the pressure difference ΔP, i.e. on the wastewater stream and on the retentate stream.

The installation 1 further comprises means (43, 45) for operating the filtration module in a recirculating mode. These means includes a line 43 to allow part of the retentate 37 exiting the ultrafiltration module 3 to be recirculated back to the entry of the membrane, i.e. back to the entry of the filtration module 3, thereby forming a recirculation loop. The retentate 37 is recirculated by means of a circulation pump 45. It is understood that the retentate 37 is added to the fresh wastewater 5 provided by the feed pump so the wastewater entering the filtration module is a mixture of the retentate and of the fresh wastewater. The flowmeter 39 and the means 35 to measure the pressure at the entrance of the ultrafiltration module 3 determine the flux and the pressure respectively on the mixture of said retentate and said fresh wastewater. For clarity reasons, this mixture is called wastewater 5.

In an embodiment, the filtration module is operated in recirculating mode wherein at least 80 vol% of the retentate stream exiting the membrane is recirculated back to the entry of the membrane, preferably at least 90 vol% of the retentate stream exiting the membrane is recirculated, more preferably at least 95 vol% of retentate stream exiting the membrane is recirculated, even more preferably at least 98 vol% and most preferably at least 99 vol%.

The permeate 33 and the retentate 37 are continuously discharged and the volume discharged is adjusted by the pressure valves 41 downstream the ultrafiltration module 3 on both the permeate and retentate discharging lines. The flux discharged as permeate is advantageously selected to be not more than 10 % of the flux entering the membrane, for example it is at most 5 % of the flux entering the membrane. The flux discharged as retentate is advantageously selected to be not more than 5 % of the flux entering the membrane, for example it is at most 2%.

For example, if the flux of wastewater (i.e. the mixture of recirculated retentate and fresh wastewater) entering the ultrafiltration module is 5000 l/hour, the permeate flux exiting may be adjusted to be 50 l/hour and the retentate flux may be adjusted to be 10 l/hour. As 60 l/hour of product is exiting the recirculation loop, the feeding pump 7 may be adjusted to feed the recirculation loop with 60 l/h of fresh wastewater.

From the above it is understood that the person skilled in the art may adjust the pressure difference ΔP by one or more of the following means:

- adjusting the flux entering the membrane (and the therefore the velocity V of the wastewater within the fibres) by means of the recirculating pump 45 on the recirculating loop; and/or
- adjusting the flux (or the volume) of the permeate exiting the membrane by means of a pressure valve 41 on the discharging permeate line; and/or
- adjusting the flux (or the volume) of the retentate exiting the membrane by means of a pressure valve 41 on the discharging retentate line; and/or
- adjusting the flux (or the volume) of the fresh wastewater entering the membrane by means of the feed pump 7.

In accordance with the invention, the ultrafiltration module 3 comprises at least one hollow-fibre membrane with hollow-fibres of an inner diameter D of at least 0.5 mm, preferably of at least 0.6 mm, more preferably of at least 0.8 mm and most preferably of at least 1 mm.

In a preferred embodiment of the invention, the inner diameter D of the hollow fibres is at most 2.5 mm, preferably at most, 2.0 mm, more preferably at most 1.8 mm and most preferably at most 1.6 mm. It has been observed that the inner diameter of the hollow fibres should not be too large in order to achieve a reduction of the apparent viscosity within the fibres.

Without being bound by a theory, the fibre diameter should not be too large in order for the suspended solid devoid film to have a significant cross section area compared to the membrane fibre cross section and this the flow and filtering properties of the fibre being governed by the separation effect observed

The hollow-fibre membrane is also chosen to have hollow fibres with a sufficient length that allows the observed transport regime to be achieved. In accordance to the invention the length L of the fibres is to be chosen in order to comply with the relationship $L \geq V \times 0.3$ sec, wherein V is the velocity in m/s of the wastewater 5 within the fibres.

In a preferred embodiment of the invention, the use includes passing the wastewater through the hollow-fibres of the membrane velocity V in m/s complying with the relationship L ≥ V x 0.4 sec more preferably complying with the relationship L ≥ V x 0.5 sec.

In a preferred embodiment of the invention, the hollow fibres of the membrane have a length L of at least 0.75 m, preferably of at least 0.80 m, more preferably of at least 0.90 m, such as for example of 1 m.

Preferably, the velocity V of the wastewater within the fibres is at least 1 m/s, more preferably at least 1.2 m/s, and/or is at most 3 m/s, preferably at most 2 m/s.

It has been found by the inventors that when such transport regime is achieved, the apparent viscosity $\mu$ of the wastewater within the hollow-fibres is lower than the initial viscosity $\mu i$ of the wastewater before being subjected to ultrafiltration.

The apparent viscosity $\mu$ within the fibres is calculated according to formula (1) which is derived from the Hagen-Poiseuille equation:

$$\mu = \frac{1}{8} \times \frac{R^2}{L} \times \frac{\Delta P}{V} \ (1)$$

wherein

- R is the inner radius of the fibres
- L is the length of the fibres
- $\Delta$**P** is the pressure difference calculated from the pressure at the entrance and at the exit of the ultrafiltration module
- V is the calculated velocity of the wastewater (or digestate) within the fibres calculated from the flux per fibre (in $m^3$/s) and the cross section of said fibres (in $m^2$). The flux per fibre is determined from the total flux divided by the number of fibres in the membrane, wherein the total flux of the wastewater is the flux of the wastewater as measured at the entry of the membrane.

Thus for a given membrane, a given flux and a given pressure difference, the person skilled in the art may determine if the transport regime is achieved or not by calculating the apparent viscosity within the hollow fibres and comparing it to the initial viscosity of the wastewater as measured by a viscometer, for example a rotational viscometer.

With preference the initial viscosity $\mu i$ of the wastewater 5 is at most 20 mPa s, preferably ranging from 5 to 20 mPa s, more preferably ranging from 6 to 15 mPa s, and even more preferably ranging from 7 to 12 mPa s, wherein the initial viscosity is measured by a rotational viscometer at 20°C at a shear rate of 1000 $s^{-1}$.

Thus, for example, when the person skilled in the art is willing to achieve an apparent viscosity within the fibres of about half the initial viscosity of 8 mPa s, thus an apparent viscosity of about 4 mPa s, with a membrane having 620 hollow fibres of a length of 1 m and of an inner diameter of 1.4 mm; he or she can choose a given flux for passing the wastewater in the membrane, for example of 5000 l/h resulting in a velocity within fibres of 1.46 m/s, and determine which would be the suitable working pressure difference to obtain. In this case, the pressure difference should be selected to be about 100,000 Pa. The pressure difference is adjusted by varying the parameters above described such as the flux or volume of permeate and/or of retentate discharged.

In a preferred embodiment of the invention, the pressure difference is ranging from 20,000 Pa to 150,000, preferably ranging from 50,000 to 120,000 Pa.

It is noted that the velocity in fibres as well as the pressure difference are interrelated so that modifying the value of one parameter may influence the value of the other one. However, it is underlined that it is not compulsory to achieve a specific value of the apparent viscosity $\mu$ of the wastewater within the fibres to obtain the effect of the invention but rather a decrease of the viscosity calculated within fibres per formula (1) as compared to the initial viscosity.

In a preferred embodiment of the invention, the use includes selecting the velocity within fibres and/or the pressure difference to have the apparent viscosity $\mu$ of the wastewater within the fibres being at most 0.6 $\mu i$, preferably at most 0.5 $\mu i$, more preferably at most 0.4 $\mu i$ and even more preferably at most 0.35 $\mu i$. Thus, according to said preferred embodiment, the use includes selecting the velocity within fibres and/or the pressure difference to have the viscosity initial $\mu i$ of the wastewater within the fibres being decreased of at least 40%, preferably of at least 50%, more preferably of at least 60% and even more preferably of at least 65%.

In a preferred embodiment of the invention, the use includes selecting the velocity within fibres and/or the pressure difference to have the apparent viscosity $\mu$ of the wastewater within the fibres being at least 0.05 $\mu i$, preferably 0.1 $\mu i$, and more preferably at least 0.12 $\mu i$.

The ultrafiltration is performed at a feed pressure depending on the membrane properties and preferably ranging from 20,000 to 150,000 Pa (0.2 to 1.5 bar), more preferably ranging from 60,000 to 110,000 Pa (0.6 to 1.1 bar). Thus the ultrafiltration membranes (or the microfiltration membranes) according to the invention may allow a feed pressure of at least 200,000 Pa (2 bar), preferably of at least 400,000 (4 bar).

It has been found by the inventors that the apparent (reduced) viscosity within the hollow fibres of the membrane reflects the nature of the digestate so that for a given membrane and velocity or pressure conditions the apparent viscosity is higher for a digestate with higher fibre content than for a digestate with lower fibre content.

In a preferred embodiment, the wastewater is passed through the ultrafilration membrane in a tangential mode. Tangential-flow ultrafiltration is known to the man skilled in the art and disclosed for example in Gabler, F.R., ASM News, Vol. 50 No. 7 (1984), p.229. In this mode, the solution flows parallel to the filter membrane so that the fluid flow continually cleans the filter surface and helps to prevent clogging by non-filterable solutes. A pressure differential across the membrane causes fluid and filterable solutes to flow through the filter. This can be conducted as a continuous-flow process, since the solution is passed repeatedly over the membrane while that fluid which passes through the filter is continually drawn off into a separate circuit. Tangential-flow ultrafiltration separates solely on the basis of molecular size.

The membranes used in the filtration step are preferably organic hollow-fibre membranes. Examples of the materials for the hollow-fibre membranes include polyethylene, polypropylene, polyvinylidene fluoride, polysulfone, polyether sulfone, polyacrylonitrile, polyamide, cellulose, cellulose acetate, etc. However, in a preferred embodiment of the invention, at least one hollow-fibre membrane is made of polysulfone.

With preference, the hollow-fibre membrane has a double skin. Such membrane has separation layers on both sides of the fibre. Thus, the membrane can be operated bidirectionally. Double skin feature offers operating flexibility for both "inside-out" and "outside-in" configurations. Double skin hollow-fibre membranes are known to the man skilled in the art and are for example commercially available from POLYMEM®.

In a preferred embodiment, the hollow-fibre membrane is an ultrafiltration membrane and has a cut-off of less than 150 KD, preferably less than 50 KD, more preferably less than 20 KD. For example the hollow-fibre membrane has a cut-off of 10 KD. The cut-off of a membrane is generally defined as the molecular weight of a particle that would exhibit a rejection of 90% when subjected to filtration by the membrane.

In another embodiment, the hollow-fibre membrane in the ultrafiltration module has a membrane area of more than 2 m$^2$. For example the hollow-fibre membrane ultrafiltration module may have a membrane area of more 2.3 m$^2$, for example 2.5 m$^2$, or even 22.5 m$^2$. The membrane area of the hollow-fibre membrane ultrafiltration module is calculated by multiplying the hollow-fibre circumference by the length of the fibre and by the number of the fibres in the module.

In another preferred embodiment, the hollow-fibre membrane has a pure water flux at 20°C of at least 50 l/h.bar, preferably of at least 100 l/h.bar, more preferably of at least 150 l/h.bar and most preferably of at least 180 l/h.bar. The pure water flux expresses the rate at which water permeates the ultrafiltration membrane.

Suitable ultrafiltration hollow fibre membranes according to the invention are for example commercially available from POLYMEM® under the commercial names UF30L1 and UF120L1.

UF30L1 is a polysulfone hollow-fibre membrane with a membrane area of 2.58 m$^2$, a cut-off of 10 KDa, having fibres with an inner diameter of 1.4 mm and a length of 1 m. UF30L1 allows a maximal transmembrane pressure of 250,000 Pa (2.5 bar) at 20 °C and maximal feed pressure of 400,000 Pa (4 bar). UF30L1 is made in accordance to the double skin technology.

UF120L1 is a polysulfone hollow-fibre membrane with a membrane area of 22.5 m$^2$, a cut-off of 10 KDa, having fibres with an inner diameter of 1.4 mm. UF120L1 allows a maximal transmenbrane pressure of 250,000 Pa (2.5 bar) at 20 °C and maximal feed pressure of 400,000 Pa (4 bar). UF120L1 is made in accordance to the double skin technology.

It should be understood that the invention, when related to ultrafiltration, is not limited to the use of one of these two membranes.

Suitable microfiltration membranes according to the invention are for example UF30MFM commercially available from POLYMEM® and LiquB200 commercially available from Membrana®.

UF30MFM is a polysulfone hollow-fibre membrane with a membrane area of 4.2 m$^2$, a pore diameter of 0.1 μm, having fibres with an inner diameter of 0.85 mm and a length of 1 m. UF30MFM allows a maximal transmembrane pressure of 250,000 Pa (2.5 bar) at 20 °C and maximal feed pressure of 400,000 Pa (4 bar). UF30MFM is made in accordance to the double skin technology.

LiquB200 is a polysulfone hollow-fibre membrane with a membrane area of 6.9 m$^2$, a pore diameter of 0.1 μm, having fibres with an inner diameter of 1.2 mm and a length of 1 m.

It should be understood that the invention, when related to microfiltration, is not limited to the use of one of these two membranes.

In order to protect as much as possible the membrane during the filtering, the use according to the invention involves inversion of the direction of circulation of the retentate, in order to minimize the accumulation of material at the inlet of the membrane over time. Preferably the process also involves additionally or alternately, regular backwashing by reversing the direction of the flow through the membrane.

The backwashing is realized by injection of a specified quantity of ultrafiltrate from the outside inward hollow-fibre composing module. In backwashing the membrane is periodically inverted by the use of a pump so that the permeate flows back into the feeds lifting the fouling layer from the surface of the membrane. The backwashing helps to decrease the filter cake, a small layer which form on the membrane and limits the flow of permeate through the fibre.

The frequency and the duration of these backwashing are defined according to the quality of the digestate to be treated. For example, the frequency can be every half hour for the duration of one minute.

**Examples**

Examples 1 to 5: influence of the membrane and of ultrafiltration conditions

Digestate having an initial viscosity of 8 mPa s has been filtered using different ultrafiltration membranes modules. The initial viscosity was measured using a rotational viscometer, (HAAKE™ Viscotester™ 550 operated with sensor system NV). The initial viscosity was measured at 20°C at a shear rate of 1000 s$^{-1}$.

The characteristics of the ultrafiltration membranes modules are given in table 1

Table 1: Ultrafiltration membranes

|  | A | B | C | D |
|---|---|---|---|---|
|  | Polymem UF20L2 | Polymem UF20L1 | Polymem UF30L1 | Orelis kerasep |
| Membrane material | polysulfone | polysulfone | polysulfone | mineral |
| Fibre internal diameter (mm) | 1.4 | 1.4 | 1.4 | 3.5 |
| Membrane area (m2) | 0,23 | 0.21 | 2.5 | 0.24 |
| Molecular weight cut off (kDa) | 100 | 10 | 10 | 15 |
| Pure water flux (l/h.bar) at 20°C | 40 | nd | 200 | nd |
| Double skin | yes | yes | yes | - |
| nd = not determined | | | | |

Example 1 - comparative example

The digestate was pretreated on a vibrating screen of 45 μm. The initial viscosity was 8.01 mPa s, and the dry matter content 4 wt. % based on the total weight of the pretreated digestate. The feed pressure was about 80,000 Pa (0.8 bar). The membrane used was the organic membrane B with a cut-off at 10 KDa. The flow rate was 1,500 UH and the time of the experiment was 210 min. 4 backwashing were performed at the times 60, 100, 128 and 150 min. The backwashing allows an increase of the flow rate from 37 to 120 %, however after 10 min the flow rate is back to the same value as before the backwashing.

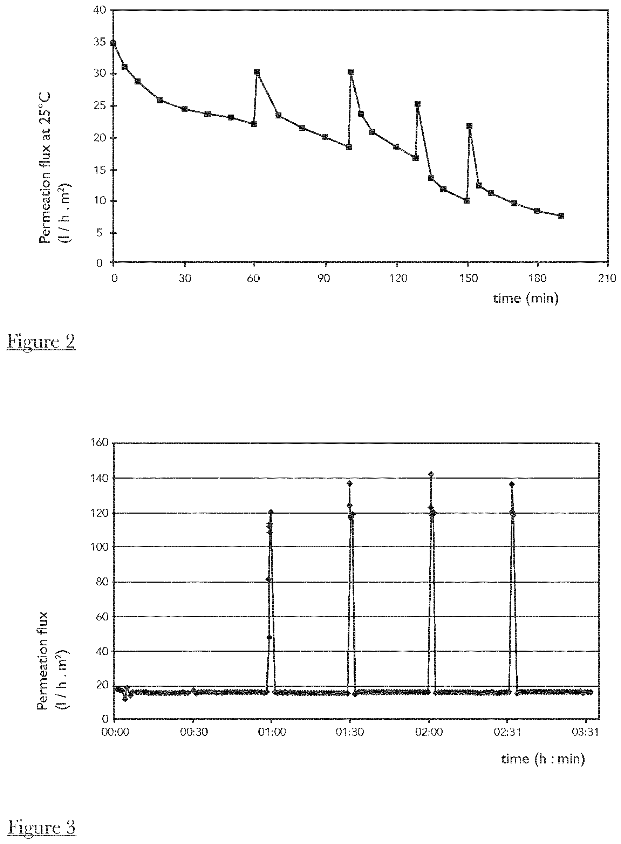

Figure 2 shows the permeation flux as a function of the time. At time 190 min, 50% of the fibres were clogged.

Example 2- comparative example

The digestate was pretreated on a vibrating screen of 45 μm. The feed pressure was ranging from 80,000 to 90,000 Pa (0.8 and 0.9 bar). The membrane used was the organic membrane A with a cut-off at 100 KDa. The flow rate was 1,500 L/h and the time of the experiment was 210 min. No backwashing was performed. At time 210 min, 50% of the fibres were clogged.

Example 3 - inventive example

The digestate was pretreated by centrifugation to have a dry matter content lower than 3 wt% based on the total weight of the pretreated digestate. The feed pressure was ranging from 20,000 to 100,000 Pa (0.2 to 1 bar). The membrane used was the organic membrane C with a cut-off at 10 KDa. The flow rate was 5,000 Uh and the time of the experiment was 393 min. 9 backwashing were performed at the times 43, 90, 137, 174, 210, 240, 288, 322 and 363 min.

Example 4 - inventive example

The digestate was pretreated by centrifugation to have a dry matter content lower than 3 wt% based on the total weight of the pretreated digestate. The feed pressure was ranging from 10,000 to 60,000 Pa (0.1 to 0.6 bar). The membrane used was the organic membrane C with a cut-off at 10 KDa. The flow rate was 5,000 L/h and the time of the experiment was 183 min. 4 backwashing were performed at the times 59 min, 1 h 30 min, 2 h and 2h 33 min.

Figure 3 shows the permeation flux as a function of the time.

Example 5 - comparative example

The digestate was pretreated on a vibrating screen of 60 $\mu$m. The feed pressure was ranging from 100,000 to 200,000 Pa (1 to 2 bar). The membrane used was the mineral membrane D with a cut-off at 15 KDa. The flow rate was 2,800 L/h and the time of the experiment was 166 min. No backwashing was performed. Although the clogging of the membrane in E5 was not determined, a regular decrease of the permeate flux was observed during the time of the experiment.

For each of Examples 1 to 5 the apparent viscosity within the fibres was calculated in accordance to formula (1)

$$\mu = \frac{1}{8} \times \frac{R^2}{L} \times \frac{\Delta P}{V} \ (1)$$

wherein :

- $\mu$ is the calculated apparent viscosity within the fibres
- **R** is the inner radius of the fibres
- **L** is the length of the fibres
- $\Delta$**P** is the pressure difference calculated from the pressure at the entrance and at the exit of the membrane
- **V** is the calculated velocity of the digestate within the fibres calculated from the flux per fibre (in $m^3$/s) and the cross section of said fibres (in $m^2$). The flux per fibre is determined from the total flux divided by the number of fibres in the membrane.

The results are reported on table 2.

Table 2

| | Unit | E1 | E2 | E3 | E4 | E5 |
|---|---|---|---|---|---|---|
| Membrane | | B | A | C | C | D |
| Material | | Polysulfone | Polysulfone | Polysulfone | Polysulfone | Ceramic |
| Cut-off | kDa | 10 | 100 | 10 | 10 | 10 |
| Flow rate | L/h | 1,500 | 1,500 | 5,000 | 5,000 | 2,800 |
| Time | min | 190 | 210 | 393 | 183 | 166 |
| Number of backwashings | | 4 | - | 9 | 4 | - |
| Length (L) of the membrane hollow fibres | m | 0.32 | 0.32 | 1 | 1 | 1.17 |
| Inner radius (R) of the membrane hollow fibres | m | 7x $10^{-4}$ | 7x $10^{-4}$ | 7x $10^{-4}$ | 7x $10^{-4}$ | 1.75x $10^{-3}$ |
| Pressure difference ($\Delta$P) | Pa | 80,000 | 85,000 | 100,000 | 60,000 | 150,000 |
| Velocity in fibres (V) | m/s | 1.63 | 1.78 | 1.46 | 1.46 | 4.25 |
| Apparent viscosity in fibres ($\mu$) (1) | mPa s | 9.39 | 9.14 | 4.20 | 2.52 | 11.54 |
| clogging | | Yes | Yes | No | No | Nd |
| [1] The apparent viscosity is calculated according to formula (1) Nd: not determined | | | | | | |

The results on table 2 demonstrates that no clogging of the fibres appears when the calculated apparent viscosity within the fibres is reduced compared to the initial viscosity. A marked reduction of at least 40 % of the initial viscosity was observed for membrane fibres length of 1 m associated with a sufficiently small inner radius. It is believed that the membranes used in E1 and E2 had hollow fibres too short and that the membrane used in E5 had a fibres diameter too large to achieve transport regime and the reduction of apparent viscosity.

Example 6 to 13: influence of the digestate nature

Four different digestates were tested

- D2 was a digestate from co-fermentation with high fibre content.
- D3 was a digestate from fermentation of a feedstock slurry having significant amount of pig manure and with low fibre content.
- D4 was a digestate pig manure / silage with high fibre content.
- D5 was a digestate from pig manure /silage diluted by 1:3 lower fibre content.

For all digestates D2 to D5 the initial viscosity was varying from 8 to 12 mPa s and the dry content was below 3 wt% after pretreatement by centrifugation. The initial viscosity was measured by a rotational viscometer at 20°C at a shear rate of 1000 s$^{-1}$. The feed pressure was ranging from 20,000 to 80,000 Pa (0.2 to 0.8 bar). The membrane used was the organic membrane C with a cut-off at 10 KDa. The flow rate was about 5,000 L/h.

The results are reported on table 3, where it can be observed that a marked reduction of viscosity was observed for all digestates. No clogging of the membrane occurred.

Table 3

| | Units | E6 | E7 | E8 | E9 | E10 | E11 | E12 | E13 |
|---|---|---|---|---|---|---|---|---|---|
| Digestate | | D2 | D2 | D2 | D3 | D3 | D3 | D4 | D5 |
| Membrane | | C | C | C | C | C | C | C | C |
| Flow rate | l/h | 4,715 | 5,095 | 4,731 | 4,481 | 4,885 | 5,100 | 5,104 | 4,991 |
| Length (L) of the membrane hollow fibres | m | 1 | 1 | 1 | 1 | 1 | 1 | 1 | 1 |
| Inner radius (R) of the membrane hollow fibres | m | 7x 10$^{-4}$ | 7x 10$^{-4}$ | 7x 10$^{-4}$ | 7x 10$^{-4}$ | 7x 10$^{-4}$ | 7x 10$^{-4}$ | 7x 10$^{-4}$ | 7x 10$^{-4}$ |
| Pressure difference ($\Delta$P) | Pa | 76,900 | 76,700 | 70,000 | 42,600 | 23,180 | 58,000 | 40,310 | 68,500 |
| Velocity in fibres (V) | m/s | 1.37 | 1.48 | 1.38 | 1.30 | 1.42 | 1.48 | 1.49 | 1.45 |
| Apparent viscosity in fibres ($\mu$) [1] | mPa s | 3.43 | 3.17 | 3.11 | 2.00 | 1.00 | 2.39 | 1.66 | 2.89 |
| clogging | | no | no | no | no | no | no | no | no |
| [1] The apparent viscosity is calculated according to formula | | | | | | | | | |

Example 14: monitoring the apparition of the turbulence regime.

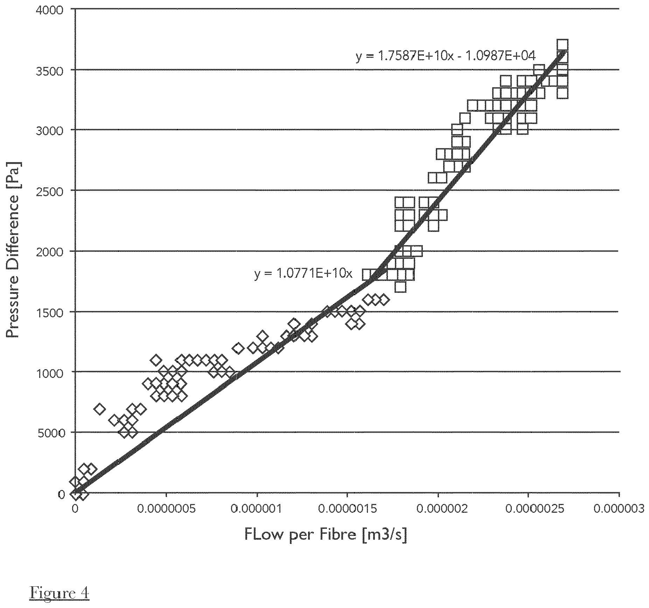

Figure 4 is a graphic plotting the pressure difference over the membrane fibres vs. the flux per fibre for water in membrane C. One can see a change of slope with apparition of the turbulent regime within the fibres, which correspond to a Reynold number of approximatively 1200. Thus for a given wastewater it is possible to the person skilled in the art to easily determine conditions to apply in order to avoid a turbulent regime within the fibres, by establishing such graphic and determining under what conditions the change of slope occurs.

**Claims**

1. Use of an hollow-fibre membrane having hollow-fibres of an inner diameter D ranging from 0.5 to 2.5 mm and a length L in m in a filtration module (3) for the treatment of wastewater (5) having an initial viscosity $\mu$i in mPa s before filtration; **characterized in that** said use includes passing the wastewater (5) through the hollow-fibres of the membrane:

- at a velocity V in m/s complying with the relationship L $\geq$ V x 0.3 sec, and
- with a pressure difference $\Delta$P in Pa selected to have an apparent viscosity $\mu$ in mPa s of the wastewater within the hollow-fibres being lower than the initial viscosity $\mu$i of the wastewater as measured before entering the filtration module, wherein the apparent viscosity $\mu$ within the hollow-fibres is calculated according to formula (1)

$$\mu = \frac{1}{8} \times \frac{R^2}{L} \times \frac{\Delta P}{V} \quad (1)$$

wherein:

- R is the inner radius in m of the hollow fibres and corresponds to D/2;
- passing a wastewater stream through the hollow-fibres of the membrane results in a permeate stream and a retentate stream and the pressure difference $\Delta$P is the difference between the pressure as measured on the wastewater stream at the entrance of the hollow-fibre membrane and on the retentate stream at the exit of the membrane; and
- V is the calculated velocity of the wastewater within the hollow-fibres calculated from the flux per fibre in $m^3$/s and the cross section of said fibres in $m^2$, wherein the flux per fibre is determined from the total flux divided by the number of fibres in the membrane, and further wherein the total flux of the wastewater is the flux of the wastewater stream as measured at the entrance of the hollow-fibre membrane.

2. The use according to claim 1 **characterized in that** the filtration module is operated in recirculating mode, preferably wherein at least 80 vol% of the retentate stream exiting the membrane is recirculated back to the entry of the membrane, more preferably at least 90 vol% of the retentate stream exiting the membrane is recirculated, even more preferably at least 95 vol% of retentate stream exiting the membrane is recirculated.

3. The use according to claim 1 or 2 **characterized in that** the filtration module is a microfiltration module or an ultrafiltration module.

4. The use according to any one of 1 to 3 **characterized in that** the wastewater (5) has an initial viscosity $\mu$i of at most 20 mPa s, preferably ranging from 5 to 20 mPa s, wherein the initial viscosity $\mu$i is measured by a rotational viscometer at 20°C at a shear rate of 1000 $s^{-1}$.

5. The use according to any one of claims 1 to 4 **characterized in that** the hollow fibres have a length L of at least 0.75 m, preferably of at least 0.80 m.

6. The use according to any one of claims 1 to 5 **characterized in that** the hollow fibres have an inner diameter ranging from 0.6 to 2.0 mm, preferably ranging from 0.8 to 1.5 mm.

7. The use according to any one of claims 1 to 6 **characterized in that** the use includes passing the wastewater through the hollow-fibres of the membrane at a velocity V in m/s complying with the relationship L $\geq$ V x 0.4 sec, preferably complying with the relationship L $\geq$ V x 0.5 sec.

8. The use according to any one of claims 1 to 7 **characterized in that** the velocity V of the wastewater (5) within the hollow fibres is at least 1 m/s, preferably at least 1.2 m/s.

9. The use according to any one of claims 1 to 8 **characterized in that** said hollow-fibre membrane is an organic hollow-fibre membrane, preferably said hollow-fibre membrane is made of one selected from polyethylene, polypropylene, polyvinylidene fluoride, polysulfone, polyether sulfone, polyacrylonitrile, polyamide, cellulose, cellulose acetate or any combination thereof, more preferably said at least one hollow-fibre membrane is made of polysulfone.

10. The use according to any one of claims 1 to 9 **characterized in that** the use includes adjusting the pressure difference $\Delta$P and/or the velocity V of the wastewater to have the apparent viscosity $\mu$ of the wastewater within the fibres being at most 0.6 μi, preferably at most 0.5 μi, and more preferably at most 0.4 μi, wherein the initial viscosity being measured by a rotational viscometer at 20°C at a shear rate of 1000 s$^{-1}$.

11. The use according to any one of claims 1 to 10 **characterized in that** said hollow-fibre membrane has the wastewater (5) is passed through said hollow-fibre membrane in a tangential mode.

12. The use according to any one of claims 1 to 11 **characterized in that** the pressure difference ΔP is ranging from 20,000 Pa to 150,000 Pa, preferably ranging from 50,000 to 120,000 Pa.

13. The use according to any one of claims 1 to 12 **characterized in that** the wastewater (5) is a digestate exiting a biogas reactor (9), with preference said digestate is produced by the anaerobic digestion in the biogas reactor of a feedstock slurry (19) comprising a feedstock (15) selected from animal tissues, biomass, fish tissues or parts, plant parts, fruits, vegetables, plant processing wastes, animal processing wastes, animal manure or urine, mammalian manure or urine, solids isolated from fermentations cultures and combination thereof, diluted in an aqueous solution (17).

14. The use according to any one of claims 1 to 13 **characterized in that** the use further includes pretreating the wastewater (5) by prefiltration, preferably with a filter having a pore size of at most 100 μm, wherein said step of prefiltration is conducted prior the filtration of the wastewater by the hollow-fibre membrane.

15. The use according to any one of claims 1 to 14 **characterized in that** the use further includes pretreating the wastewater (5) by centrifugation in order to obtain a clarified wastewater having a dry mater content of at most 5 wt% based on the total weight of the clarified wastewater, wherein said step of centrifugation is conducted prior the filtration of the wastewater (5) by the hollow-fibre membrane, and further wherein the dry matter content is the weight content of both soluble and insoluble solids left after a sample of the wastewater is subjected to an evaporation process to eliminate water and other volatile components.

Figure 1

Figure 2

Figure 3

Figure 4

Europäisches
Patentamt

European
Patent Office

Office européen
des brevets

**EUROPEAN SEARCH REPORT**

Application Number

EP 17 16 2417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/343178 A1 (MIZOKOSHI YUGO [JP] ET AL) 20 November 2014 (2014-11-20) | 1,3-7, 9-13 | INV. B01D61/14 |
| Y | * paragraph [0167] * <br> * paragraph [0195] * <br> * paragraph [0161] * <br> * paragraph [0003] * | 2,8,14, 15 | B01D63/02 <br> B01D69/08 <br> B01D71/68 <br> C02F1/00 |
| | ----- | | |
| A | EP 1 433 490 A1 (NIPRO CORP [JP]) 30 June 2004 (2004-06-30) <br> * figure 1 * <br> * claim 1 * | 1-15 | |
| | ----- | | |
| Y | US 5 549 829 A (LE MINH SON [GB]) 27 August 1996 (1996-08-27) <br> * claim 1 * | 8 | |
| | ----- | | |
| A | US 2010/089817 A1 (HEILMANN KLAUS [DE] ET AL) 15 April 2010 (2010-04-15) <br> * claim 1 * <br> * figure 1 * | 1-15 | |
| | ----- | | TECHNICAL FIELDS SEARCHED (IPC) |
| A | US 5 753 009 A (SIRKAR KAMALESH K [US] ET AL) 19 May 1998 (1998-05-19) <br> * figure 1 * <br> * claim 1 * | 1-15 | B01D <br> C02F |
| | ----- | | |
| Y | WO 98/45019 A1 (G TEC INC [CA]; SUTHERLAND GEORGE [CA]; GLASSFORD CRAIG [CA]) 15 October 1998 (1998-10-15) <br> * claim 20 * <br> * claim 6 * | 14,15 | |
| | ----- | | |

-/--

The present search report has been drawn up for all claims

| Place of search | Date of completion of the search | Examiner |
|---|---|---|
| Munich | 2 August 2017 | Hoyer, Michael |

EPO FORM 1503 03.82 (P04C01)

page 1 of 2

Europäisches
Patentamt

European
Patent Office

Office européen
des brevets

**EUROPEAN SEARCH REPORT**

Application Number

EP 17 16 2417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Nicolaas Westerhof ET AL: "Law of Poiseuille" In: "Snapshots of Hemodynamics", 1 January 2010 (2010-01-01), Springer US, Boston, MA, XP055297065, ISBN: 978-1-4419-6363-5 pages 9-14, DOI: 10.1007/978-1-4419-6363-5_2, * page 10, line 16 * | 1-15 | |
| Y | US 2013/333299 A1 (ISHII KEIICHIRO [JP] ET AL) 19 December 2013 (2013-12-19) * paragraph [0013] * * paragraph [0020] * | 2 | |
| Y | WO 03/068689 A1 (INNOVA PURE WATER INC [US]) 21 August 2003 (2003-08-21) * figure 1 * * claim 1 * | 14 | |
| | | | TECHNICAL FIELDS SEARCHED (IPC) |

The present search report has been drawn up for all claims

| Place of search | Date of completion of the search | Examiner |
|---|---|---|
| Munich | 2 August 2017 | Hoyer, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 17 16 2417

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2017

| Patent document cited in search report | | Publication date | Patent family member(s) | | Publication date |
|---|---|---|---|---|---|
| US 2014343178 | A1 | 20-11-2014 | CN | 103796744 A | 14-05-2014 |
| | | | JP | 5633576 B2 | 03-12-2014 |
| | | | JP WO2013039223 A1 | | 26-03-2015 |
| | | | KR | 20140059808 A | 16-05-2014 |
| | | | US | 2014343178 A1 | 20-11-2014 |
| | | | WO | 2013039223 A1 | 21-03-2013 |
| EP 1433490 | A1 | 30-06-2004 | AT | 458511 T | 15-03-2010 |
| | | | CN | 1511596 A | 14-07-2004 |
| | | | EP | 1433490 A1 | 30-06-2004 |
| | | | US | 2004149645 A1 | 05-08-2004 |
| US 5549829 | A | 27-08-1996 | AU | 4507793 A | 31-01-1994 |
| | | | US | 5549829 A | 27-08-1996 |
| | | | WO | 9401207 A1 | 20-01-1994 |
| US 2010089817 | A1 | 15-04-2010 | CN | 101622058 A | 06-01-2010 |
| | | | DE | 102007009208 A1 | 28-08-2008 |
| | | | EP | 2129453 A1 | 09-12-2009 |
| | | | JP | 2010519023 A | 03-06-2010 |
| | | | US | 2010089817 A1 | 15-04-2010 |
| | | | WO | 2008104351 A1 | 04-09-2008 |
| US 5753009 | A | 19-05-1998 | NONE | | |
| WO 9845019 | A1 | 15-10-1998 | NONE | | |
| US 2013333299 | A1 | 19-12-2013 | CN | 103347656 A | 09-10-2013 |
| | | | JP | 2012178418 A | 13-09-2012 |
| | | | KR | 20140001954 A | 07-01-2014 |
| | | | TW | 201235090 A | 01-09-2012 |
| | | | US | 2013333299 A1 | 19-12-2013 |
| | | | WO | 2012114395 A1 | 30-08-2012 |
| WO 03068689 | A1 | 21-08-2003 | AU | 2003210965 A1 | 04-09-2003 |
| | | | US | 2003164333 A1 | 04-09-2003 |
| | | | WO | 03068689 A1 | 21-08-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015069190 A
- US 20110017660 A
- US 20050150831 A
- US 20140343178 A

**Non-patent literature cited in the description**

- **GABLER, F.R.** *ASM News,* 1984, vol. 50 (7), 229